# DEMANDE DE BREVET EUROPEEN

(11) **EP 1 631 107 A1**
(43) Date de publication de la demande: **01.03.2006**
(21) Numéro de dépôt: 04104107.0
(22) Date de dépôt: 26.08.2004
(51) Int. Cl.: H04Q 7/38

(54) **Méthode de contrôle d'accès entre un module de contrôle et un module de localisation autonome**

(71) Demandeur: BIWI S.A., 2855 Glovelier (CH)
(72) Inventeur: Bourquard, Pascal, 2854 Bassecourt (CH)
(74) Mandataire: Wenger, Joel-Théophile

(57) **Abrégé**

La présente invention vise à proposer une méthode pour sécuriser l'accès à un module autonome de détermination de position géographique et disposant de moyens de communications pour transmettre sa position. La présente invention propose une méthode de contrôle d'accès entre un module de contrôle et un module autonome comprenant un dispositif de localisation et un dispositif de communication, ces deux modules comprenant une clé de sécurité et un identifiant, cette méthode comprenant les étapes suivantes :
- détermination d'une valeur de contrôle par le module de contrôle,
- encryption de l'ensemble valeur de contrôle et identifiant par la clé de sécurité,
- transmission d'un message contenant l'ensemble encrypté vers le module autonome et au moins une commande,
- décryption de l'ensemble et vérification de l'égalité entre l'identifiant reçu avec celui mémorisé dans le module autonome,
- dans l'affirmative, vérification que la valeur de contrôle n'a pas déjà été reçue par ledit module autonome,
- dans l'affirmative, acceptation de la commande du message.

## Description

### Domaine de l'invention

La présente invention concerne un module couplant un dispositif de localisation géographique et un dispositif de transmission de données sans fil.

### Etat de la technique

De tels modules existent sur le marché et utilisent par exemple la technologie bien connue GPS (Global Positionning System) qui est basée sur la réception de signaux provenant de satellites géostationnaires. Une fois la position du module connue, ce module dispose d'une voie de communication sans fil de type GSM, GPRS, CDMA ou UMTS.

La norme de communication joue un rôle mineur et peut être de type quelconque.

De tels modules sont actuellement disponibles sur le marché tel que proposés par Wavecom S.A (France). Ces modules sont complètement autonomes et peuvent être utilisés pour de nombreuses applications tels que la traçabilité d'objets, d'animaux ou de systèmes d'alerte sur des bateaux ou des véhicules.

Du fait que ces modules ont une alimentation autonome, le mode le plus utilisé est le mode interrogatif. L'utilisateur souhaitant connaître la position du module envoie un message d'interrogation. Ce message déclenche l'activation du dispositif de localisation et lorsqu'une position a été déterminée, cette position est transmise sur le canal de communication.

Un tel module a été utilisé dans le document EP 1.012.809 pour déterminer la charge de trafic sur les routes. Le procédé et le système concernent la collecte de données sur le trafic routier par l'intermédiaire d'un réseau mobile. La position instantanée d'un véhicule est déterminée par des moyens tels que des GPS dont sont équipés certains véhicules qui se trouvent dans le réseau routier. Les positions déterminées sont transmises par des moyens de transmissions installés dans les véhicules, sous forme de messages courts à une centrale de collecte de données de trafic. Ces messages courts sont exploités de façon à déterminer des segments de routes et les vitesses moyennes des véhicules sur ces segments.

En général, les moyens de communication sont reliés à une centrale qui gère l'ensemble des modules par exemple dans le but de déclencher un appel d'urgence tel qu'illustré dans le document EP 0748727A1. Cet appel permet de localiser le véhicule en difficulté et d'intervenir rapidement.

La majorité des systèmes mettant en oeuvre des modules autonomes sont contrôlés par une centrale qui peut en tout temps connaître la position d'un tel module. Ceci semble une condition nécessaire pour le suivi des véhicules ou d'objets de valeur, mais peut, dans certaines applications, être considéré comme une atteinte à la sphère privée. C'est pourquoi, pour certaines applications et pour interdire une utilisation abusive du système, le numéro d'appel d'un tel module est gardé secret. En effet, on peut imaginer les conséquences pour un tiers de connaître les emplacements d'objets de valeur ou d'une personne à son insu.

Néanmoins, les messages échangés sur le réseau de télécommunication sont accessibles par tous et peuvent facilement être interprétés. Une fois le numéro d'appel connu, un tiers peut interroger le module et obtenir ainsi la position à n'importe quel moment.

C'est pourquoi la présente invention vise à pallier ce défaut et propose une méthode de contrôle d'accès entre un module de contrôle et un module autonome comprenant un dispositif de localisation et un dispositif de communication, ces deux modules comprenant une clé de sécurité et un identifiant, cette méthode comprenant les étapes suivantes :
- détermination d'une valeur de contrôle par le module de contrôle,
- encryption de l'ensemble valeur de contrôle et identifiant par la clé de sécurité,
- transmission d'un message contenant l'ensemble encrypté vers le module autonome et au moins une commande,
- décryption de l'ensemble et vérification de l'égalité entre l'identifiant reçu avec celui mémorisé dans le module autonome,
- dans l'affirmative, vérification que la valeur de contrôle n'a pas déjà été reçue par ledit module autonome,
- dans l'affirmative, acceptation de la commande du message.

Cette méthode comporte l'avantage de ne nécessiter aucune synchronisation entre les deux modules pour fonctionner. Si un message est perdu et n'arrive pas au module autonome, le prochain message sera accepté sans autre pour autant que l'identifiant soit correct d'une part et que la valeur de contrôle n'ait pas déjà été utilisée.

Cette valeur de contrôle peut prendre plusieurs formes. Une première forme est un simple compteur. A chaque message généré par le module de contrôle, le compteur est incrémenté. Dans le module autonome, la dernière valeur du compteur reçue est mémorisée. Lors de la réception d'un nouveau message, le module autonome va vérifier que la valeur du compteur est supérieure à celle qui a été mémorisée lors d'un message précédent.

Selon une autre forme, la valeur de contrôle et générée aléatoirement. Le module autonome va conserver un certain nombre de ces valeurs reçues, par exemple 5, et va comparer la nouvelle valeur reçue avec l'une des valeurs mémorisées. Si elle ne figure pas dans les 5 valeurs mémorisées, le message est accepté. Cette nouvelle valeur de contrôle vient remplacer la plus ancienne des valeurs mémorisées selon le principe bien connu du tampon circulaire.

La commande la plus courante dans un message est la requête de la position du module autonome. Ainsi, ce module ne va renvoyer sa position géographique que si la vérification par l'identifiant et la valeur de contrôle ont été positive. On remarquera que chaque message transmis est unique et ne peut être réutilisé. Un tiers ayant intercepté un message ne peut le réutiliser car ceci serait immédiatement détecté par le module autonome. L'identifiant n'est pas une donnée critique car même la connaissance de cette donnée par un tiers ne permet pas de générer un message valide sans la clé de sécurité.

Cet identifiant peut donc avantageusement être le numéro d'appel du module ou son numéro de série.

### Brève description des figures

L'invention sera mieux comprise grâce à la description détaillée qui va suivre et qui se réfère aux dessins annexés qui sont donnés à titre d'exemple nullement limitatif, à savoir:
- la figure 1 illustre le flux des messages pour l'obtention d'une position du module autonome,
- la figure 2 illustre le format des messages envoyés du module de contrôle au module autonome.

### Description détaillée

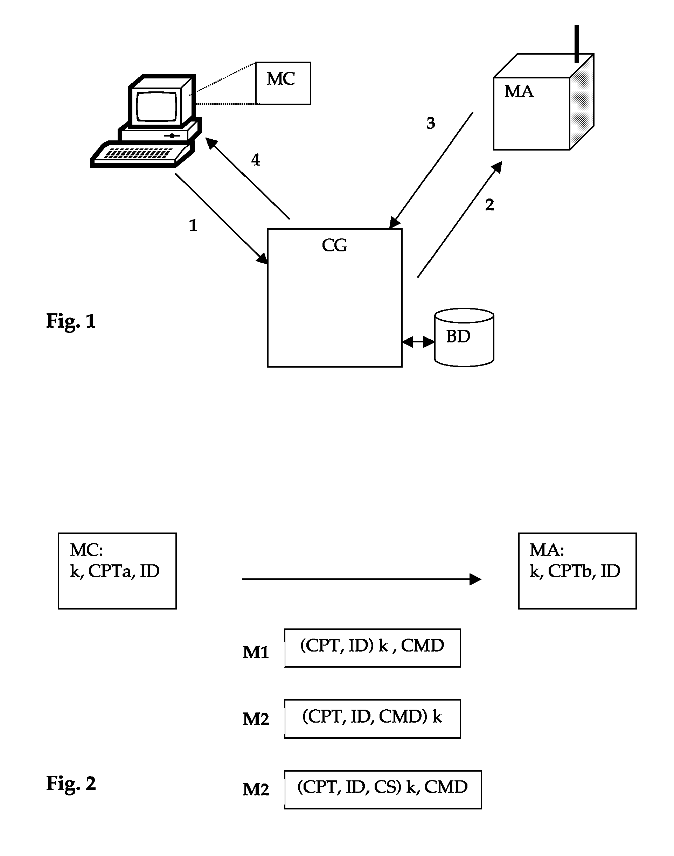

Selon l'exemple illustré à la figure 1, le module de contrôle MC est localisé dans un dispositif local d'un usager. Ce dispositif local peut être un ordinateur comme illustré, un téléphone portable, un palm, PDA ou agenda électronique ou autre dispositif adéquat. Il comprend une mémoire pour stocker la clé secrète k, l'identifiant ID du module autonome MA et selon le mode préféré de l'invention, le compteur CPT.

Lorsqu'une position est souhaitée, un message est généré par le module de contrôle MC et est transmis à un centre de gestion CG selon la flèche 1. Ce centre transmet cette requête au dispositif de communication du module autonome MA et selon l'implémentation, ajoute les commandes nécessaires pour activer le module autonome MA selon la flèche 2.

Une fois le message reçu par le module autonome MA et accepté, ce module détermine sa position grâce au dispositif de localisation et retourne un message au centre de gestion selon la flèche 3.

Ce message est interprété par le centre de gestion qui peut ajouter des informations telles qu'une position sur la carte et retourne ces informations à l'usager (flèche 4).

Il est à noter que cette méthode permet à un usager de contrôler l'utilisation de son module autonome tout en bénéficiant des fonctions évoluées du centre de gestion telle de l'affichage de la position sur une carte. L'usager ne connaît pas nécessairement le numéro d'appel du module autonome et la syntaxe des com mandes. C'est le rôle du centre de gestion CG de formater les messages. Ce dernier dispose de toutes les données utiles de chaque module autonome dans sa base de données BD.

Selon un autre mode de réalisation, le module de contrôle MC est intégré au centre de gestion CG et assure une grande sécurité d'emploi du module autonome. Les messages provenant de l'usager (flèche 1) vont contenir une identification et un mot de passe afin d'authentifier l'usager par rapport au centre de gestion.

Sur la figure 2 est illustré un exemple de messages transmis entre le module de contrôle MC et le module autonome MA. Chacun de ces modules dispose de la clé secrète k, d'un compteur CPT et de l'identifiant ID. Dans cette implémentation, le module de contrôle MC est placé dans le centre de gestion qui prépare également les commandes à destination du module autonome MA.

Le module autonome dispose de son propre compteur CPTb pour comparer la valeur du compteur CPT dans le message. Si la valeur de CPT est plus grande que CPTb, le message est accepté (si bien entendu l'identifiant est correct). Dans ce cas, la valeur de CPT est copiée dans la compteur CPTb. On constate que si un message est perdu ou non acheminé, la différence entre la valeur de CPT et CPTb sera plus grande que 1. Ceci ne pose pas de problème tant que CPT > CPTb. Le système se re-synchronise de lui-même.

Selon l'exemple du message M1, le module de contrôle MC compose un message comprenant le compteur CPT qui est CPTa et l'identifiant ID. Ces deux éléments sont encryptés par la clé secrète k. A cet ensemble encrypté, on ajoute les commandes CMD tels que la requête de la position du module autonome, la définition du mode de fonctionnement ou la requête de l'état du module (par ex. le niveau de la batterie). Une fois le message préparé, le module de contrôle MC incrémente son compteur CPTa en vue d'un prochain message.

Dans l'exécution avec un nombre aléatoire, le module autonome MA doit conserver un certain nombre de ces valeurs de contrôle reçues pour garantir que chaque message est nouveau. Si par exemple le nombre aléatoire fait 2 octets, on va de préférence conserver les 10 dernières valeurs soit 20 octets au total. L'arrivée et l'acceptation d'un message provoque l'effacement de la plus ancienne valeur stockée dans cette mémoire et son remplacement par la nouvelle.

Selon un deuxième exemple illustré par M2, la commande CMD est incluse dans l'ensemble encrypté. Ceci permet de sécuriser les commandes transmises et empêcher tout tiers de remplacer une commande sur un message légalement généré par le module de contrôle.

Un troisième exemple illustré par M3 montre les commandes CMD placées hors de l'ensemble encrypté. Néanmoins on calcule une signature CS (fonction Checksum, CRC, Hash, SHA ou autre) sur les commandes CMD et cette signature est insérée dans la partie encryptée. Ainsi il est possible pour le module autonome MA de s'assurer que les commandes n'ont pas été modifiées.

Il est entendu que la clé secrète k peut être de type symétrique (identique des deux cotés) ou asymétrique. Dans ce cas, on placera la clé publique de préférence dans le module de contrôle MC et la clé privée dans le module autonome MA.

Cette demande couvre tous types de module autonome de localisation, soit par un système GPS (Global Positionning System) soit par une localisation basée sur les antennes de téléphonie sans fil. En effet, il est possible de placer un logiciel approprié dans le module autonome pour permettre une localisation grâce aux antennes de téléphonie. Un tel système est proposé par Cambridge Positioning Systems Limited aux USA.

## Revendications

1. Méthode de contrôle d'accès entre un module de contrôle (MC) et un module autonome (MA) comprenant un dispositif de localisation et un dispositif de communication, ces deux modules comprenant une clé de sécurité (k) et un identifiant (ID), cette méthode comprenant les étapes suivantes :
- détermination d'une valeur de contrôle (CPT) par le module de contrôle (MA),
- encryption de l'ensemble valeur de contrôle (CPT) et identifiant (ID) par la clé de sécurité (k),
- transmission d'un message contenant l'ensemble encrypté vers le module autonome (MA) avec au moins une commande (CMD),
- décryption de l'ensemble et vérification de l'égalité entre l'identifiant (ID) reçu avec celui mémorisé dans le module autonome (MA),
- dans l'affirmative, vérification que la valeur de contrôle (CPT) n'a pas déjà été reçue par ledit module autonome (MA),
- dans l'affirmative, acceptation de la commande (CMD) du message.

2. Méthode de contrôle d'accès selon la revendication 1, **caractérisée en ce que** la commande (CMD) enclenche le dispositif de localisation pour déterminer la position géographique dudit module autonome (MA) et renvoie un message contenant ladite position.

3. Méthode de contrôle d'accès selon la revendication 1 ou 2, **caractérisée en ce que** la valeur de contrôle (CPT) est un compteur qui est incrémenté à chaque message généré par le module de contrôle (MC).

4. Méthode de contrôle d'accès selon les revendications 1 à 3, **caractérisée en ce que** le message est accepté si la valeur de contrôle (CPT) est supérieure à une valeur de contrôle (CPTb) mémorisée dans le module autonome (MA).

5. Méthode de contrôle d'accès selon la revendication 1, **caractérisée en ce que** la valeur de contrôle (CPT) est un nombre aléatoire généré par le module de contrôle (MC) et **en ce que** le module autonome (MA) contient une mémoire conservant des valeurs de contrôle précédemment reçues, le message est accepté si la valeur de contrôle (CPT) du message courant n'est pas comprise dans les valeurs de contrôle précédemment reçues.

6. Méthode de contrôle d'accès selon les revendications 1 à 5, **caractérisée en ce que** la commande (CMD) est ajouté à l'ensemble valeur de contrôle (CPT) et identifiant (ID) avant l'encryption par la clé de sécurité (k).

7. Méthode de contrôle d'accès selon les revendications 1 à 5, **caractérisée en ce qu'**elle comprend une étape de calcul d'une signature (CS) sur la ou les commandes (CMD), cette signature (CS) étant ajoutée à l'ensemble valeur de contrôle (CPT) et identifiant (ID) avant l'encryption par la clé de sécurité (k).

8. Méthode de contrôle d'accès selon l'une des revendications précédentes, **caractérisée en ce que** la clé de sécurité (k) est de type symétrique.

9. Méthode de contrôle d'accès selon les revendications 1 à 7, **caractérisée en ce que** la clé de sécurité (k) est de type asymétrique, la clé publique étant stockée dans le module de contrôle (MC) et la clé privée étant stockée dans le module autonome (MA).
